# EUROPÄISCHE PATENTSCHRIFT

(11) **EP 1 808 424 B1**
(45) Veröffentlichungstag und Bekanntmachung des Hinweises auf die Patenterteilung: **01.09.2010**
(21) Anmeldenummer: 06023875.5
(22) Anmeldetag: 17.11.2006
(51) Int. Cl.: C04B 41/90

(54) **Verfahren zur Herstellung eines mit einer Edelmetallschicht überzogenen Gegenstands aus Keramik oder Porzellan sowie mit einer solchen Schicht überzogener Keramik- oder Porzellangegenstand**
Method for manufacturing a ceramic or porcelain article coated with a noble metal layer and article produced by the method
Procédé de fabrication d'un article en ceramic ou porcelain pourvu d'un revêtement en métal précieux et article ainsi obtenu

(30) Priorität: 17.01.2006 DE 102006002373
(43) Veröffentlichungstag der Anmeldung: 18.07.2007
(73) Patentinhaber: DURAVIT AG, 78132 Hornberg (DE)
(72) Erfinder: Stammel, Thomas, 78132 Hornberg (DE); Sonntag, Pedro, 78112 St. Georgen (DE); Gendronneau, Damien, 77756 Hausach (DE)
(74) Vertreter: Blaumeier, Jörg

(56) Entgegenhaltungen:
- DE-A1- 3 122 546
- JP-A- 6 056 558

## Beschreibung

Die Erfindung betrifft ein Verfahren zur Herstellung eines mit einer Edelmetallschicht überzogenen Gegenstands aus Keramik oder Porzellan.

Bei Keramik- oder Porzellangegenständen, seien es Gebrauchs- oder Haushaltsgegenstände wie Geschirrteile, seien es Sanitärartikel, wird mitunter auf die in einem vorher durchgeführten Verfahrensschritt aufgebrachte Glasur des Gegenstandes eine sehr dünne Edelmetallschicht gebracht, um dem Gegenstand ein besonderes Äußeres bzw. Design zu verleihen. Der Gegenstand wird dabei zunächst mit einer Glanzglasurschicht versehen, die durch Aufbringen einer Glasursuspension und anschließendes Einbrennen derselben gebildet wird. Auf diese Glanzglasurschicht wird anschließend die Edelmetallschicht unter Verwendung geeigneter edelmetallhaltiger Lösungen, die anschließend eingebrannt werden, gebracht.

Zwar kann das Äußere bzw. das Design des Keramik- oder Porzellangegenstandes hierdurch vorteilhaft gestaltet werden, nachteilig aber ist die hohe Kratzempfindlichkeit der Edelmetallbeschichtung. Üblicherweise ist die Edelmetallschicht sehr dünn, die Dicke liegt im Bereich von ca. 0,1 µm. Ein Anstoßen mit einem härteren oder schärferen Gegenstand führt bei bekannten Edelmetallschichten sehr häufig zur Bildung eines Kratzers, das heißt, die Edelmetallschicht wird beschädigt und abgetragen, so dass die darunter liegende Glanzglasur, die sich durch eine extreme Oberflächenebenheit auszeichnet, sichtbar ist. Infolgedessen können zumeist nur Gegenstände, die z. B. dekorativen Zwecken dienen, mithin also keine häufig benutzten Gebrauchsgegenstände sind, mit einer Edelmetallschicht beschichtet werden, da dort die Gefahr, die Edelmetallschicht zu beschädigen, relativ gering ist.

Aus DE 31 22 546 C2 ist ein keramisches Abziehbild bekannt, das auf einen Keramikkörper aufgebracht werden kann und eine Glanzedelmetallpräparation aufweist, die eingebrannt werden kann.

Aus JP 6-056558 A ist ein Keramikartikel bekannt, auf dessen Oberfläche eine Glasflussschicht mit eingebundenen Zirkonpartikeln ausgebildet ist, worüber eine sogenannte "build-up color" gebildet wird. Die Glasflussschicht ist mit einer Edelmetallschicht überzogen.

Ferner ist aus DD 157 327 B1 eine eingefärbte Mattglasur insbesondere für Wand- und Bodenfliesen bekannt. Gemäß dortigem Beispiel C weist die Glasur unter anderem einen erhöhten Widerstand gegen Oberflächenverschleiß auf. Auf die glasierte Oberfläche beispielsweise einer Fliese kann eine zusätzliche Dekoration aufgebracht werden.

Der Erfindung liegt damit das Problem zugrunde, ein Verfahren anzugeben, das die Herstellung eines mit einer Edelmetallschicht überzogenen Keramik- oder Porzellangegenstandes mit deutlich höherer Kratzfestigkeit ermöglicht.

Zur Lösung dieses Problems ist erfindungsgemäß ein Verfahren vorgesehen, bei dem
- auf den ungebrannten Gegenstand zunächst eine Mattglasursuspension in einer Schichtdicke von 0,5 bis 1,5 mm aufgebracht
- und zur Bildung einer rauen Mattglasurschicht mit einer mittleren Rautiefe R_{z} zwischen 20 und 50 µm eingebrannt wird,
- auf welche anschließend eine edelmetallhaltige Lösung derart aufgebracht wird, dass die Edelmetallschicht nach dem Einbrennen eine Schichtdicke zwischen 0,05 und 1,5 µm ausbildet.

Anders als im Stand der Technik wird auf den ungebrannten Keramik- oder Porzellangegenstand keine Glanzglasur, sondern eine Mattglasurschicht aufgebracht. Eine solche Mattglasurschicht zeichnet sich durch eine bestimmte, sehr feine Oberflächenrauigkeit aus. Zur Herstellung wird zunächst auf den ungebrannten Gegenstand eine wässrige Mattglasursuspension in einer Schichtdicke von ca. 0,5 - 1 mm, vorzugsweise durch Spritzen, aufgetragen. Die Mattglasursuspension enthält - anders als eine Glanzglasursuspension - schwer schmelzbare Bestandteile, die während des nachfolgenden Brandes nicht oder nur teilweise aufschmelzen bzw. sich beim Erkalten als Kristalle ausscheiden. Diese Körner oder Kristalle stehen aus der Mattglasuroberfläche hervor oder sind mit einer glasigen Schicht überzogen. Die glasige Schicht nimmt die Konturen der Körner bzw. Kristalle an, wodurch sich die sehr feine Oberflächenrauigkeit ergibt. Auf dem Porzellangegenstand verbleibt also eine silikatische Schicht, bestehend aus einer glasartigen Matrix, in die mineralische Körner oder Kristalle eingebettet sind. Die typische gemittelte Rautiefe R_{z} (DIN) liegt häufig im Bereich von ca. 20 - 40 µm.

In einem zweiten Arbeitsgang wird sodann eine edelmetallhaltige Lösung aufgebracht, vorzugsweise ebenfalls aufgespritzt, und anschließend der Gegenstand einem zweiten Brand unterzogen. Die Lösungsbestandteile dampfen ab, es verbleibt auf der leicht rauen Oberfläche der Mattglasurschicht eine sehr dünne metallische Schicht von 0,05 - 1,5, bevorzugt von ca. 0,1 µm Dicke. Die feine Rauigkeit der Glasur bleibt erhalten, da die Metallschicht im Vergleich zur Oberflächenrauigkeit sehr dünn ist. Gleichwohl ergibt sich eine für den Betrachter harmonische, glatte Oberflächenansicht, da die Rauigkeit der Mattglasur und dieser folgend der Edelmetallschicht minimal und sehr fein ist.

Diese trotz Beschichtung gegebene leichte Rauigkeit ist der Grund für die hohe Kratzfestigkeit einer der in der erfindungsgemäßen Weise hergestellten Edelmetallschicht. Selbst wenn versehentlich an den beschichteten Gegenstand mit einem anderen Gegenstand geschlagen wird, wird die Edelmetallschicht lediglich im Bereich der Glasurspitzen abgetragen. In allen daran anschließenden Bereichen, also den Flanken der Erhebungen und der Täler, bleibt die Edelmetallschicht jedoch unangetastet. Es erfolgt infolgedessen kein großflächiger Schichtabtrag wie bei einer darunter liegenden Glanzglasurschicht, vielmehr lediglich ein extrem kleiner, punktueller Abtrag, der optisch nicht ins Auge fällt, nachdem der größte Flächenbereich der Edelmetallschicht von dem verletzenden Gegenstand überhaupt nicht berührt wird.

Insgesamt lässt das erfindungsgemäße Verfahren demzufolge die Herstellung eines Keramik- oder Porzellangegenstandes mit einer wesentlich kratzfesteren Edelmetallbeschichtung zu. Bei einem solchen Gegenstand kann es sich um einen beliebigen Gebrauchsgegenstand wie ein Geschirr, einen Dekorationsgegenstand wie Figuren oder Vasen oder um Sanitärteile wie Waschbecken, Toilettenschüsseln etc. handeln.

Eine besonders vorteilhafte Weiterbildung des erfindungsgemäßen Verfahrens sieht vor, dass der Mattglasursuspension wenigstens ein Farbstoff zur Bildung einer eingefärbten Mattglasurschicht beigefügt wird. Gemäß dieser Erfindungsausgestaltung wird zur Verringerung des Farbkontrasts zwischen Mattglasurschicht und Edelmetallschicht die Mattglasur eingefärbt, wobei bevorzugt ein Farbstoff oder ein Farbstoffgemisch verwendet wird, dessen Farbe möglichst der der Edelmetallschicht nahe kommt, so dass mithin die Mattglasurschichtfarbe der Edelmetallschichtfarbe ähnlich ist.

Als Edelmetallschicht-Farbglasur-Kombinationen wird zweckmäßigerweise bei Herstellung einer Goldschicht als Farbstoff ein mineralischer Farbstoff enthaltend Zr-V-Farbkörper und/oder Zr-Si-Pr-Farbkörper verwendet. Zur Herstellung einer Platinschicht wird ein mineralischer Farbstoff enthaltend einen Co-, Fe-, Mn-, Ni- oder Cr-Farbkörper und einen Zr-Si-Fe-Farbkörper verwendet. Diese Aufzählung verwendbarer Farbkörper für die Herstellung einer Farbglasurschicht bei Herstellung einer Gold- oder Platinschicht ist nicht abschließend, vielmehr sind grundsätzlich auch andere Farbstoffe verwendbar, solange sie eine Glasurschichteinfärbung ermöglichen.

Neben dem erfindungsgemäßen Verfahren betrifft die Erfindung ferner einen Keramik- oder Porzellangegenstand, hergestellt gemäß dem erfindungsgemäßen Verfahren, mit einer eingebrannten rauen Mattglasurschicht mit einer mittleren Rautiefe R_{z} zwischen 20 und 50 µm, auf der eine eingebrannte Edelmetallschicht mit einer Schichtdicke zwischen 0,05 und 1,5 µm aufgebracht ist. Die Mattglasurschicht ist bevorzugt eingefärbt, um den farblichen Kontrast zur aufgebrachten Edelmetallschicht zu verringern oder weitestgehend bzw. vollständig auszugleichen. Ein lokaler Abtrag der Edelmetallschicht im Bereich der Glasurerhebungen oder -spitzen, der die Mattglasurschicht sichtbar macht, fällt infolge des geringen Farbkontrasts zwischen Edelmetallschicht und Mattglasurschicht überhaupt nicht auf.

Sofern die Edelmetallschicht eine Goldschicht ist, ist erfindungsgemäß die Mattglasurschicht mittels eines mineralischen Farbstoffs enthaltend Zr-V-Farbkörper und/oder Zr-Si-Pr-Farbkörper eingefärbt. Handelt es sich bei der Edelmetallschicht um eine Platinschicht, ist die Mattglasurschicht erfindungsgemäß mittels eines mineralischen Farbstoffs enthaltend einen Co-, Fe-, Mn-, Ni- oder Cr-Farbkörper und einen Zr-Si-Fe-Farbkörper eingefärbt.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: ein Flussdiagramm, das die wesentlichen Schritte des erfindungs- gemäßen Verfahrens darstellt, und
- Fig. 2: eine Teilansicht eines Keramik- oder Porzellangegenstandes im Schnitt.

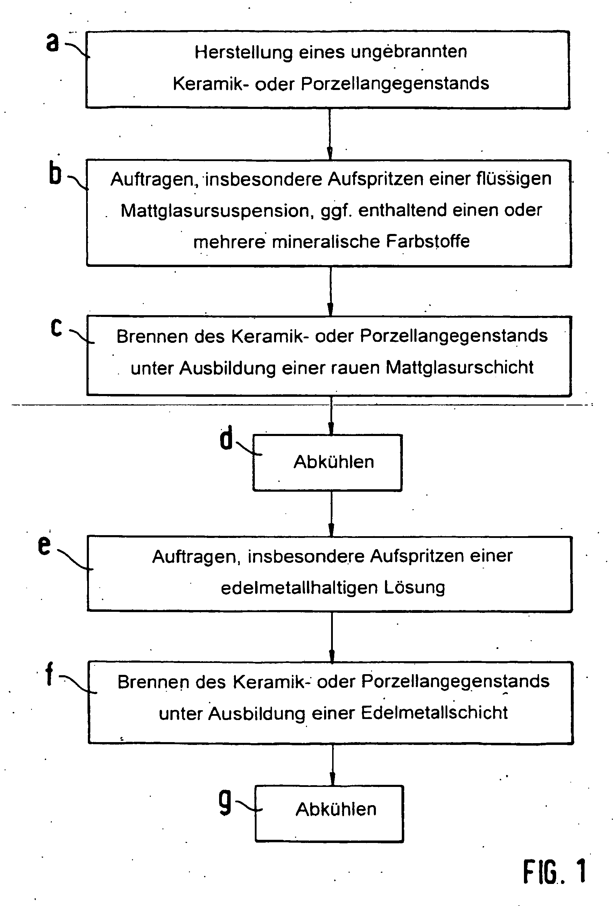

Fig. 1 zeigt ein Flussdiagramm der zentralen Schritte des erfindungsgemäßen Verfahrens. Im Schritt a wird zunächst in an sich bekannter Weise ein gebrannter Keramik- oder Porzellangegenstand hergestellt. Bei diesem handelt es sich beispielsweise um einen Sanitärgegenstand wie ein Waschbecken oder dergleichen, das üblicherweise im Schlickerguss hergestellt wird. Auf den ungebrannten Grünling wird im Schritt b eine Mattglasursuspension aufgetragen, vornehmlich aufgespritzt. Die flüssige Mattglasursuspension weist beispielsweise folgende Zusammensetzung auf:

| **Bestandteil** | **Gewichts-%** |
|---|---|
| Quarz | 24,3 |
| Schamotte | 8,3 |
| Kaolin | 4,5 |
| Nephelin-Syenit | 7,6 |
| Dolomit | 23,1 |
| Bariumcarbonat | 2,7 |
| Fritte A | 4,4 |
| Fritte B | 6,8 |
| Aluminiumhydroxid | 8,2 |
| Zirkonsilikat | 10,1 |

Diese Zusammensetzung ist lediglich beispielhaft, selbstverständlich kann die Mattglasur auch eine beliebig andere Zusammensetzung aufweisen, so lange sichergestellt ist, dass sich eine Mattglasur mit einer gewissen Oberflächenrauigkeit ausbildet.

Diese Mattglasursuspension kann gegebenenfalls Farbstoffzuschläge aufweisen, um eine eingefärbte Mattglasurschicht zu bilden. Der zugeschlagene mineralische Farbstoff richtet sich zweckmäßigerweise nach der Art der aufgebrachten Edelmetallschicht. Ziel ist es, die Mattglasurschicht so einzufärben, dass sich ein möglichst geringer Farbkontrast zwischen der eingefärbten Mattglasurschicht und der nachfolgend aufgebrachten Edelmetallschicht ergibt.

Im Schritt c wird nun der auf diese Weise mit Mattglasursuspension in einer Stärke von 0,5 - 1,5, vornehmlich von ca. 0,8 mm belegte Gegenstand bei einer Brenntemperatur zwischen 1100° C - 1300° C gebrannt. Im Schritt d wird der gebrannte Keramik- oder Porzellangegenstand abgekühlt. Er weist nun eine Mattglasurschicht mit einer feinen Oberflächenrauigkeit auf, die eine gemittelte Rautiefe R_{z} (DIN) ≤ 50 µm, insbesondere ≤ 40 µm, aufweist, um einerseits rau genug für eine hohe Kratzfestigkeit zu sein, und um andererseits fein genug für eine optisch homogene, glatte Edelmetallschicht zu sein.

Im nächsten Schritt e wird nun auf die Mattglasurschicht eine edelmetallhaltige Lösung, die der Ausbildung der Edelmetallschicht dient, aufgebracht, bevorzugt auch hier aufgespritzt, um einen möglichst homogenen Auftrag zu ermöglichen.

Als edelmetallhaltige Lösung bzw. Edelmetallpräparat kann beispielsweise die unter dem Handelsnamen "Glanzgold GG 95/3-12%" der W.C. Heraeus GmbH, Ceramic Colours Division, Heraeusstr. 12-14, DE-63450 Hanau, erhältliche Zubereitung verwendet werden. Diese Zubereitung enthält Goldsulforesinat, weitere Metallresinate sowie Kunst- und Naturharze gelöst in organischen Lösungsmitteln. Mit dieser edelmetallhaltigen Lösung kann eine Goldschicht hergestellt werden.

Zur Bildung einer Platinschicht kann die unter dem Handelsnamen "Glanzplatin GP 3309/1" der Firma W.C. Heraeus GmbH erhältliche Zubereitung verwendet werden. Diese Zubereitung enthält neben Goldsulforesinat auch Platinsulforesinat, weitere Metallresinate und Kunststoff- und Naturharze gelöst in organischen Lösungsmitteln.

Nach dem Auftragen der jeweiligen edelmetallhaltigen Lösung wird im Schritt f der Keramik- oder Porzellangegenstand ein zweites Mal gebrannt. Die Brenntemperatur liegt im Bereich zwischen 700 - 1100° C, insbesondere im Bereich von 800 - 900° C. Beim Brennen dampfen die Lösungsmittel ab, es bildet sich letztlich eine homogene Edelmetallschicht über der oberflächenrauen Mattglasurschicht aus, wobei die Edelmetallschicht ebenfalls leicht rau ist, im Wesentlichen der Kontur der Mattglasurschicht folgend. Schließlich erfolgt im Schritt g die Abkühlung des fertigen Gegenstands.

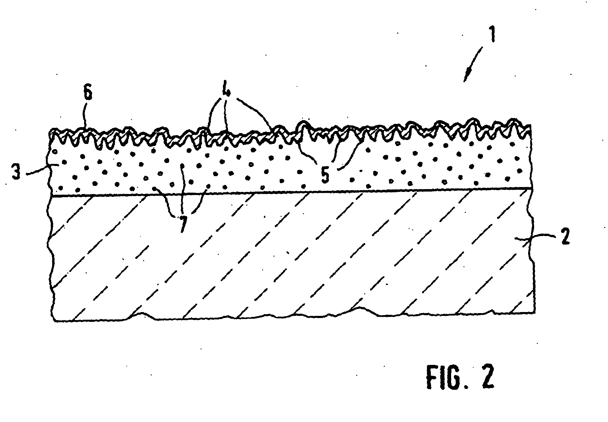

Fig. 2 zeigt in Form einer Prinzipdarstellung einen Ausschnitt aus einem erfindungsgemäßen Keramik- oder Porzellangegenstand 1, z. B. einem Sanitärgegenstand. Dieser besteht aus dem eigentlichen Keramik- oder Porzellankörper 2, auf den oberflächlich eine Mattglasurschicht 3 aufgebracht ist. Diese besitzt ersichtlich ein raues, strukturiertes Oberflächenprofil mit einer Vielzahl unregelmäßiger Erhebungen 4 und entsprechenden Vertiefungen 5. Die Darstellung ist lediglich exemplarischer Natur und weder maßstabs- noch formgerecht.

Auf der Mattglasurschicht 3 ist die Edelmetallschicht 6 aufgebracht, die deutlich dünner ist als die Mattglasurschicht 3. Während die durchschnittliche Dicke der Mattglasurschicht im Bereich von ca. 0,8 mm liegt, beträgt die durchschnittliche Schichtdicke der Edelmetallschicht 6 weniger als 1 µm, sie liegt bevorzugt im Bereich von ca. 0,5 µm oder weniger.

Ersichtlich ist auch die Edelmetallschicht 6 leicht rau, weist also eine strukturierte raue Oberfläche auf. Sie bedeckt sowohl die Erhebungen 4 als auch die Vertiefungen 5, wobei die Vertiefungen 5 mit etwas mehr Edelmetallmaterial ausgefüllt sind, so dass sich eine gewisse Verflachung der raueren Glasurstruktur ergibt. Wird nun mit einem harten Gegenstand gegen die Edelmetallschicht 6 geschrammt, so wird diese lediglich im Bereich der Spitzen bzw. Erhebungen 4 der strukturierten Oberfläche abgetragen, alle daran anschließenden Bereiche bleiben im Wesentlichen unverletzt. Das Gesamterscheinungsbild weist damit trotz lokaler, jedoch lediglich mikroskopischer punktueller Beschädigung der Edelmetallschicht eine immer noch homogene Schicht auf.

Sollte dennoch einmal die Edelmetallschicht größerflächig beschädigt werden, so dass sie bis auf die Mattglasurschicht abgetragen ist, mithin also diese lokal sichtbar ist, ist zweckmäßigerweise beim gezeigten Ausführungsbeispiel die Mattglasurschicht eingefärbt. Sie enthält mineralische Farbkörper 7, die in entsprechend hoher Dichte in die Mattglasurschicht 3 eingebracht sind und diese entsprechend färben. Der jeweils verwendete Farbkörper oder die Farbkörpermischung richtet sich danach, ob es sich bei der Edelmetallschicht 6 um eine Gold- oder eine Platin- oder eine andere Schicht handelt. Die Intensität der Färbung der Mattglasurschicht 3 wie auch der oder die verwendeten Farbkörper sollte stets so gewählt werden, dass die Farbglasurschicht so stark eingefärbt ist, dass sich nur ein geringer Farbkontrast zwischen ihr und der Edelmetallschicht ergibt. Würde also die Edelmetallschicht 6 stark verletzt werden, so dass die Mattglasurschicht freiliegt, so würde diese optisch nicht oder nur unwesentlich in Erscheinung treten, nachdem der Farbunterschied zwischen der unverletzten Edelmetallschicht und der freiliegenden Mattglasurschicht infolge deren Einfärbung minimal ist.

## Patentansprüche

1. Verfahren zur Herstellung eines mit einer Edelmetallschicht überzogenen Gegenstands aus Keramik oder Porzellan, bei dem
- auf den ungebrannten Gegenstand zunächst eine Mattglasursuspension in einer Schichtdicke von 0,5 bis 1,5 mm aufgebracht
- und zur Bildung einer rauen Mattglasurschicht mit einer mittleren Rautiefe R_{z} zwischen 20 und 50 µm eingebrannt wird,
- auf welche anschließend eine edelmetallhaltige Lösung derart aufgebracht wird, dass die Edelmetallschicht nach dem Einbrennen eine Schichtdicke zwischen 0,05 und 1,5 µm ausbildet.

2. Verfahren nach Anspruch 1, **dadurch gekennzeichnet, dass** der Mattglasursuspension wenigstens ein Farbstoff zur Bildung einer eingefärbten Mattglasurschicht beigefügt wird.

3. Verfahren nach Anspruch 2, **dadurch gekennzeichnet, dass** bei Herstellung einer Goldschicht als Farbstoff ein mineralischer Farbstoff enthaltend Zr-V-Farbkörper und/oder Zr-Si-Pr-Farbkörper und zur Herstellung eine Platinschicht ein mineralischer Farbstoff enthaltend einen Co-, Fe-, Mn-, Ni- oder Cr-Farbkörper und einen Zr-Si-Fe-Farbkörper verwendet wird.

4. Keramik- oder Porzellangegenstand, hergestellt nach dem Verfahren nach einem der Ansprüche 1 bis 3, mit einer eingebrannten rauen Mattglasurschicht (3) mit einer mittleren Rautiefe R_{z} zwischen 20 und 50 µm, auf der eine eingebrannte Edelmetallschicht (6) mit einer Schichtdicke zwischen 0,05 und 1,5 µm aufgebracht ist.

5. Keramik- oder Porzellangegenstand nach Anspruch 4, **dadurch gekennzeichnet, dass** die Mattglasurschicht (3) eingefärbt ist.

6. Keramik- oder Porzellangegenstand nach Anspruch 5, **dadurch gekennzeichnet, dass** die Edelmetallschicht (6) eine Goldschicht und die Mattglasurschicht (3) mittels eines mineralischen Farbstoffs (7) enthaltend Zr-V-Farbkörper und/oder Zr-Si-Pr-Farbkörper eingefärbt ist.

7. Keramik- oder Porzellangegenstand nach Anspruch 5, **dadurch gekennzeichnet, dass** die Edelmetallschicht (6) eine Platinschicht und die Mattglasurschicht (3) mittels eines mineralischen Farbstoffs (7) enthaltend einen Co-, Fe-, Mn-, Ni- oder Cr-Farbkörper und einen Zr-Si-Fe-Farbkörper eingefärbt ist.

## Claims

1. A method for manufacturing an object made of ceramic or porcelain coated with a noble-metal layer, wherein
- initially a matt-glaze suspension is applied in a layer thickness from 0.5 to 1.5 mm to the un-fired object;
- and baked in order to form a rough matt-glaze layer with a mean surface roughness R_{z} between 20 and 50 µm;
- to which a noble-metal-containing solution is then applied in such a manner that the noble-metal layer forms a layer thickness between 0.05 and 1.5 µm after baking.

2. The method according to claim 1,
**characterised in that**
at least one colorant is added to the matt-glaze suspension for the formation of a coloured, matt-glaze layer.

3. The method according to claim 2,
**characterised in that**,
as colorant, for the manufacture of a gold layer, a mineral colorant containing Zr-V-pigments and/or Zr-Si-Pr-pigments is used, and for the manufacture of a platinum layer, a mineral colorant containing a Co-, Fe-, Mn-, Ni- or Cr-pigment and a Zr-Si-Fe-pigment is used.

4. A ceramic or porcelain object, manufactured according to the method specified in any one of claims 1 to 3, with a baked, rough matt-glaze layer (3) with a mean surface roughness R_{z} between 20 and 50 µm, on which a baked noble-metal layer (6) is applied with a layer thickness between 0.05 and 1.5 µm.

5. The ceramic or porcelain object according to claim 4,
**characterised in that**
the matt-glaze layer (3) is coloured.

6. The ceramic or porcelain object according to claim 5,
**characterised in that**
the noble-metal layer (6) is a gold layer and the matt-glaze layer (3) is coloured by means of a mineral colorant (7) containing Zr-V-pigment and/or Zr-Si-Pr-pigment.

7. The ceramic or porcelain object according to claim 5,
**characterised in that**
the noble-metal layer (6) is a platinum layer and the matt-glaze layer (3) is coloured by means of a mineral colorant (7) containing a Co-, Fe-, Mn-, Ni- or Cr-pigment and a Zr-Si-Fe-pigment.

## Revendications

1. Procédé de fabrication d'un article en céramique ou en porcelaine recouvert d'une couche de métal précieux, dans lequel
- sur l'article avant cuisson, on applique tout d'abord une suspension de glaçure mate en une épaisseur de couche de 0,5 à 1,5 mm
- et on la cuit pour la formation d'une couche de glaçure mate rugueuse avec une profondeur de rugosité moyenne Rz comprise entre 20 et 50 µm,
- sur laquelle on applique ensuite une solution contenant un métal précieux de telle sorte qu'après la cuisson, la couche de métal précieux forme une épaisseur de couche comprise entre 0,05 et 1,5 µm.

2. Procédé selon la revendication 1, **caractérisé en ce que** l'on ajoute à la suspension de glaçure mate au moins un colorant pour la formation d'une couche de glaçure mate teinte.

3. Procédé selon la revendication 2, **caractérisé en ce que**, pour la réalisation d'une couche d'or, un colorant minéral contenant des corps colorés au Zr-V et/ou des corps colorés au Zr-Si-Pr, et pour la réalisation d'une couche de platine, un colorant minéral contenant un corps coloré au Co, Fe, Mn, Ni ou Cr et un corps coloré au Zr-Si-Fe sont utilisés comme colorants.

4. Article en céramique ou en porcelaine fabriqué d'après le procédé selon l'une quelconque des revendications 1 à 3, avec une couche de glaçure mate rugueuse cuite (3) ayant une profondeur de rugosité moyenne Rz comprise entre 20 et 50 µm, couche sur laquelle est appliquée avec cuisson une couche de métal précieux (6) avec une épaisseur de couche comprise entre 0,05 et 1,5 µm.

5. Article en céramique ou en porcelaine selon la revendication 4, **caractérisé en ce que** la couche de glaçure mate (3) est teintée.

6. Article en céramique ou en porcelaine selon la revendication 5, **caractérisé en ce que** la couche de métal précieux (6) est une couche d'or et **en ce que** la couche de glaçure mate (3) est teintée au moyen d'un colorant minéral (7) contenant des corps colorés au Zr-V et/ou des corps colorés au Zr-Si-Pr.

7. Article en céramique ou en porcelaine selon la revendication 5, **caractérisé en ce que** la couche de métal précieux (6) est une couche de platine et **en ce que** la couche de glaçure mate (3) est teintée au moyen d'un colorant minéral (7) contenant un corps coloré au Co, Fe, Mn, Ni ou Cr et un corps coloré au Zr-Si-Fe.
